# EUROPEAN PATENT SPECIFICATION

(11) **EP 2 251 128 B1**
(45) Date of publication and mention of the grant of the patent: **19.04.2017**
(21) Application number: 10162895.6
(22) Date of filing: 14.05.2010
(51) Int. Cl.: B23D 47/04, B27B 5/065, B27B 31/00

(54) **Machine for cutting panels of wood or similar**
Maschine zum Trennen von plattenförmigen Werkstücken aus Holz oder dergleichen
Machine pour couper des plaques en bois ou similaires

(30) Priority: 14.05.2009 IT BO20090310
(43) Date of publication of application: 17.11.2010
(73) Proprietor: Biesse S.p.A., Pesaro (IT)
(72) Inventor: Lattanzi, Lorenzo, 61100, PESARO (IT)
(74) Representative: Bergadano, Mirko

(56) References cited:
- EP-A1- 1 510 276
- DE-A1- 2 614 164
- DE-B- 1 080 287
- DE-U- 1 821 019
- GB-A- 1 285 739
- US-A- 3 826 164

## Description

The present invention relates to a machine for cutting panels of wood or similar, as per the preamble of claim 1. Such a machine is known from US 3,826,164. In wood panel working, a machine is known comprising a bed defining a substantially horizontal table for at least one panel of wood or similar; and a feed unit, normally comprising two grip-and-carry assemblies movable independently to feed respective panels along the table and through a cutting station equipped with a blade movable crosswise to the panel travelling direction to cut at least one part off each panel.

The feed units for feeding the panels through the cutting station are normally of two types.

In a first type, a first grip-and-carry assembly extends between two lateral guide members defining the bed crosswise to the panel travelling direction, and a second grip-and-carry assembly is movable between a rest position, in which it is located beneath the table or outwards of one of the lateral members, and a work position, in which it projects above the table and between the lateral members. This type of feed unit is relatively complicated, bulky, and expensive.

In the second type, the two grip-and-carry assemblies are arranged side by side, and each extend between a relative lateral member and a central member mounted between the lateral members. In this case, each grip-and-carry assembly is unable to correctly grip panels wider than the distance between the central member and relative lateral member, thus leaving the panel portions projecting outwards of the central member and/or relative lateral member unsupported; and the feed unit itself is not very versatile.

It is an object of the present invention to provide a machine for cutting panels of wood or similar, designed to eliminate the above drawbacks, and which is cheap and easy to produce.

According to the present invention, there is provided a machine for cutting panels of wood or similar, as claimed in the accompanying Claims.

A non-limiting embodiment of the present invention will be described by way of example with reference to the accompanying drawings, in which:
Figure 1 shows a schematic plan view, with parts removed for clarity, of a preferred embodiment of the machine according to the present invention;
Figure 2 shows a schematic side view, with parts removed for clarity, of the Figure 1 machine;
Figure 3 shows a schematic end view, with parts removed and an enlarged detail for clarity, of the Figure 1 machine;
Figure 4 shows the same view as in Figure 3, of a first variation of the Figure 1, 2 and 3 machine;
Figure 5 shows the same view as in Figures 3 and 4, of a second variation of the Figure 1, 2 and 3 machine. This second variation is not according to the invention.

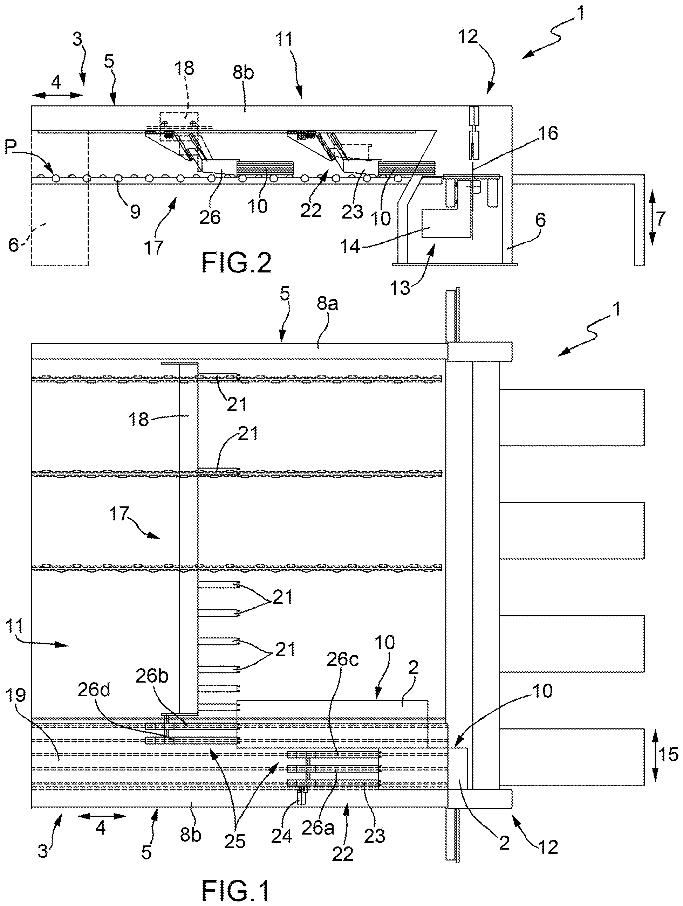

Number 1 in Figures 1, 2 and 3 indicates as a whole a machine for cutting substantially parallelepiped-shaped, substantially rectangular-section panels 2 of wood or similar.

Machine 1 comprises an elongated bed 3 extending in a horizontal direction 4 and having two parallel gantry structures 5, each of which extends in direction 4 and comprises two parallel uprights 6, which extend in a substantially vertical direction 7 crosswise to direction 4, and are connected at their top ends by a cross member 8 parallel to direction 4.

Bed 3 is equipped with a known roller supporting device 9, which extends between the two structures 5, defines a substantially horizontal table P for at least one pack 10 of stacked panels 2, and cooperates with a feed device 11 for feeding the packs 10 of panels 2 in direction 4 and through a cutting station 12.

Station 12 is equipped with a cutting assembly 13 comprising a carriage 14, which extends beneath table P, is connected in known manner to bed 3 to perform, with respect to bed 3 and under the control of a known actuating device not shown, straight back and forth movements in a horizontal direction 15 perpendicular to directions 4 and 7, and supports a blade 16 and a scoring device (not shown), which are fitted to carriage 14 to rotate about respective longitudinal axes (not shown) parallel to each other and to direction 4.

Blade 16 and the scoring device (not shown) are fitted in known manner to carriage 14 to perform, with respect to carriage 14, straight up and down movements in direction 7 between respective lowered rest positions, in which blade 16 and the scoring device (not shown) are located beneath table P so panels 2 can be fed along table P, and respective raised work positions, in which blade 16 and the scoring device (not shown) project above table P to cut a part (not shown) off each panel 2 in each pack 10.

Blade 16 and the scoring device (not shown) are also moved by carriage 14 in direction 15 and along a cutting plane perpendicular to direction 4, in a straight back and forth movement comprising a forward movement, in which the scoring device (not shown), located ahead of blade 16 in travelling direction 15 of carriage 14, scores the bottom panel 2 in each pack 10, and blade 16 cuts the panels 2 in packs 10, and a return movement.

Device 11 comprises a first grip-and-carry assembly 17, in turn comprising a carriage 18, which extends in direction 15 between one of cross members 8 (hereinafter indicated 8a) and a portion of the other cross member 8 (hereinafter indicated 8b) projecting in direction 15 and defining a longitudinal guide member 19, is fitted in sliding manner to cross member 8a and to one end of member 19 to perform straight back and forth movements in direction 4 with respect to bed 3 and under the control of a known electric drive motor 20, and supports a number of (in the example shown, eight) grip-and-carry members 21 arranged along carriage 18 in direction 15.

Each member 21 is a gripper comprising a top jaw and a bottom jaw movable with respect to each other between a grip position and a release position, and is movable with respect to carriage 18 between a lowered work position, in which member 21 extends between the rollers of supporting device 9, and a raised rest position, in which member 21 is located above table P, at a height greater than the maximum height of a pack 10 of panels 2.

Device 11 also comprises a second grip-and-carry assembly 22, in turn comprising, in the example shown, a grip-and-carry member 23, which is identical to members 21, is mounted beneath member 19, and is fitted in sliding manner to member 19 to perform straight back and forth movements in direction 4 with respect to bed 3 and under the control of a known electric drive motor 24.

Device 11 also comprises a third grip-and-carry assembly 25, in turn comprising a number of (in the example shown, four) grip-and-carry members 26, which are identical to members 21 and 23, are mounted beneath member 19, are fitted in sliding manner to member 19 to perform straight back and forth movements in direction 4 with respect to bed 3, and of which one (hereinafter indicated 26a) is positioned facing member 23, one (hereinafter indicated 26b) is positioned facing carriage 18, and the other two (hereinafter indicated 26c and 26d) are positioned between members 26a and 26b.

Members 26a, 26b, 26c, 26d are connected selectively to member 23 or carriage 18 by respective mechanical coupling devices 27, each of which comprises a first coupling member 28 and a second coupling member 29. Member 28 is defined by a pin extending in direction 15, is fitted to relative member 23, 26a, 26b, 26c, 26d, and is movable between an extracted lock position and a withdrawn release position; and member 29 is defined by a recess facing member 28, is fitted to the corresponding member 26a, 26b, 26c, 26d or carriage 18, and is designed to receive and retain member 28.

In other words, members 26a, 26b, 26c, 26d of assembly 25 can be connected selectively to assembly 17 or 22, each of which therefore has a variable number of grip-and-carry members, depending on the size and/or shape of panels 2 and/or the cutting operations to be performed on panels 2, and is of variable width measured parallel to direction 15.

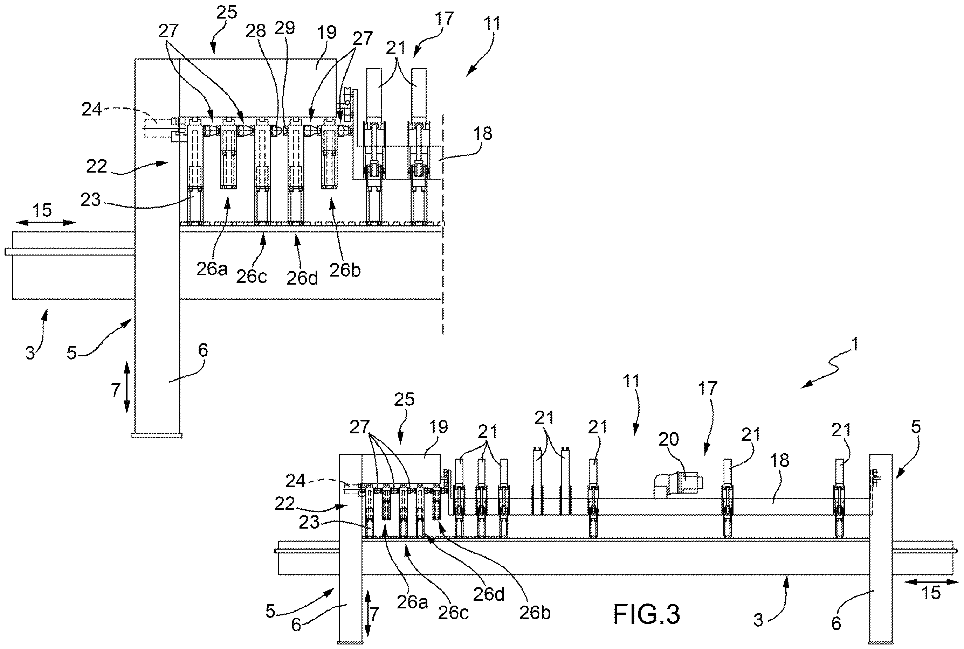

In the Figure 3 example, members 26a and 26c are connected to each other and to member 23 by respective coupling devices 27, and are therefore moved in direction 4 by motor 24; and members 26b and 26d are connected to each other and to carriage 18 by respective coupling devices 27, and are therefore moved in direction 4 by motor 20.

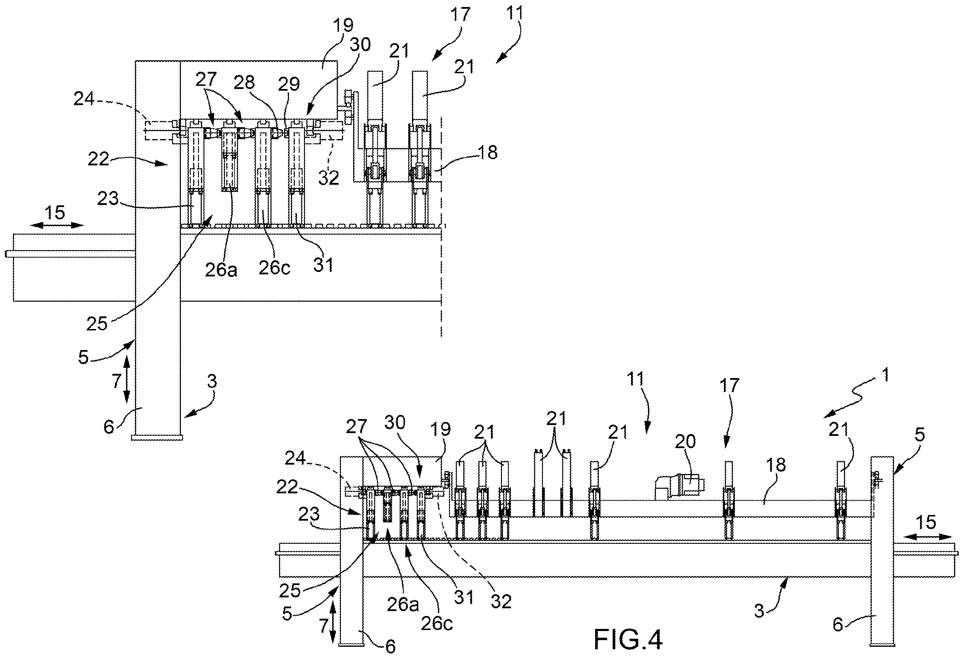

The Figure 4 variation differs from the Figure 1-3 embodiment by members 26b and 26d being replaced with a fourth grip-and-carry assembly 30 comprising, in the example shown, a grip-and-carry member 31, which is identical to members 21, 23 and 26, is mounted beneath member 19, and is fitted in sliding manner to member 19 to perform straight back and forth movements in direction 4 with respect to bed 3 and under the control of a known electric drive motor 32.

In this case :
members 26a, 26c are connected selectively to member 23 or member 31 by respective coupling devices 27;
assembly 17 has a fixed number of members 21 and is of fixed width in direction 15; and
each assembly 22, 30 has a variable number of grip-and-carry members, depending on the size and/or shape of panels 2 and/or the cutting operations to be performed on panels 2, and is of variable width measured parallel to direction 15.

In the Figure 4 example, members 26a and 26c are connected to each other and to member 23 by respective coupling devices 27, and are therefore moved in direction 4 by motor 24; and member 31 is moved in direction 4 by motor 32.

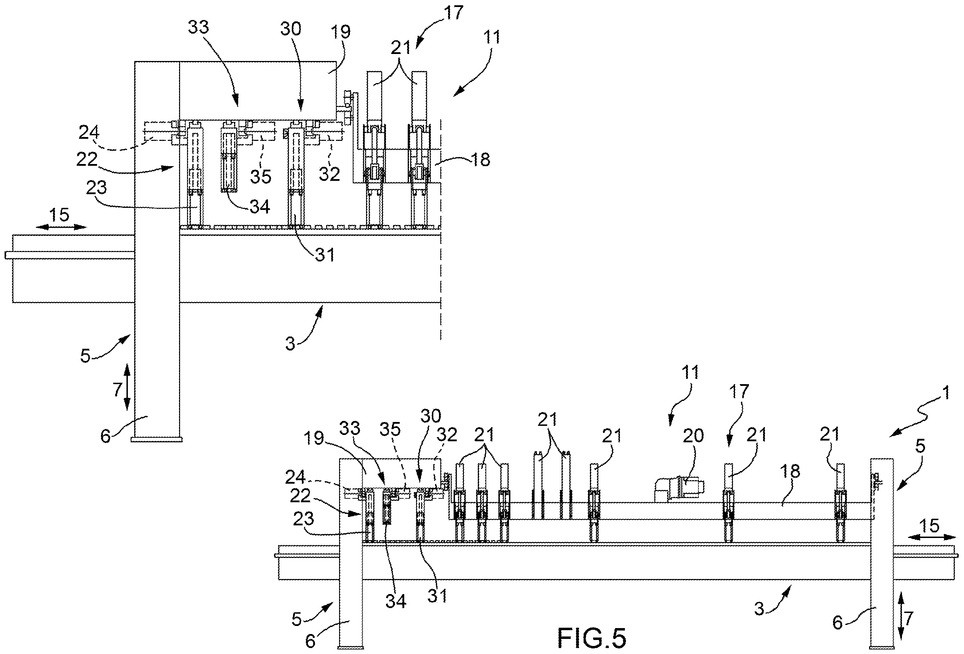

The Figure 5 variation, which is not according to the invention, differs from the Figure 4 variation by members 26a and 26c and coupling devices 27 being replaced with a fifth grip-and-carry assembly 33 comprising, in the example shown, a grip-and-carry member 34, which is identical to members 21, 23, 26 and 31, is mounted beneath member 19, and is fitted in sliding manner to member 19 to perform straight back and forth movements in direction 4 with respect to bed 3 and under the control of a known electric drive motor 35.

In this case, motors 20, 24, 32, 35 are controlled selectively by an electronic central control unit (not shown) of machine 1, to move each assembly 17, 22, 30, 33 in direction 4 with a different law of motion from that of the other assemblies 17, 22, 30, 33, with the same law of motion as the other assemblies 17, 22, 30, 33, or with the same law of motion as some of the other assemblies 17, 22, 30, 33, and a different law of motion from that of the remaining assemblies 17, 22, 30, 33.

In the Figure 5 example, members 21, 23, 31, 34 can therefore be connected electrically to one another into a single grip-and-carry assembly, or into a variable number of at most four independent grip-and-carry assemblies.

In a preferred operating mode, each motor 32, 35 is selectively controlled to move relative assembly 30, 33 with the same law of motion as assembly 17 or 22.

## Claims

1. A machine for cutting panels (2) of wood or similar, the machine comprising a cutting station (12); a feed unit (11) for moving at least one panel (2) through the cutting station (12) in a given first direction (4); and a blade (16) movable along a cutting plane substantially perpendicular to the first direction (4) to cut at least one part off each panel (2); the feed unit (11) comprising a first feed device (17; 30) in turn comprising at least one first grip-and-carry member (21; 31) for at least a first panel (2); a second feed device (22) in turn comprising at least one second grip-and-carry member (23) for at least a second panel (2); at least one third feed device (25; 30, 33) in turn comprising at least one third grip-and-carry member (26; 31, 34) connectable selectively to the first feed device (17; 30) or second feed device (22), so as to move in the first direction (4) with the same law of motion as the first feed device (17; 30) or second feed device (22); and a first drive device (20; 32) and second drive device (24) for moving the first feed device (17; 30) and second feed device (22) respectively in the first direction (4) with respective independent laws of motion; the machine being **characterized by** also comprising, for each said third grip-and-carry member (26), a respective coupling device (27) for connecting the third grip-and-carry member (26) mechanically to the first feed device (17; 30) or second feed device (22).

2. A machine as claimed in Claim 1, wherein the coupling device (27) comprises a first and second lock member (28, 29) movable with respect to each other between a lock position and a release position.

3. A machine as claimed in Claim 2, wherein the first lock member (28) comprises a pin extending crosswise to the first direction (4); and the second lock member (29) comprises a recess for receiving the pin.

4. A machine as claimed in any one of the foregoing Claims, wherein each said grip-and-carry member (21; 23; 26; 31, 34) comprises a gripper having a bottom jaw and a top jaw movable with respect to each other between a grip position and a release position.

5. A machine as claimed in any one of the foregoing Claims, wherein the third feed device (25; 30, 33) is located between the first feed device (17; 30) and the second feed device (22).

6. A machine as claimed in any one of the foregoing Claims, and also comprising a supporting frame (3) in turn comprising a first and second longitudinal guide member (8a, 8b) parallel to each other and to said first direction (4), and a third longitudinal guide member (19) extending between said first and second longitudinal guide member (8a, 8b) in the first direction (4).

7. A machine as claimed in Claim 6, wherein the third feed device (25; 30, 33) is supported by said third longitudinal guide member (19).

8. A machine as claimed in Claim 6 or 7, wherein the first feed device (17) extends between said first and third longitudinal guide member (8a, 19).

9. A machine as claimed in Claim 6 or 7, wherein the first feed device (30) is supported by the third longitudinal guide member (19); the feed unit (11) comprising a fourth feed device (17) extending between the first and third longitudinal guide member (8a, 19), and a fourth drive device (20) for moving the fourth feed device (17) in the first direction (4) with a law of motion independent of the laws of motion of the first feed device (30) and second feed device (22).

10. A machine as claimed in any one of Claims 6 to 9, wherein the third longitudinal guide member (19) projects from the second longitudinal guide member (8b) in a second direction (15) crosswise to the first direction (4).

## Patentansprüche

1. Maschine zum Schneiden von Paneelen (2) aus Holz oder dergleichen, umfassend eine Schneidstation (12), eine Zuführeinheit (11) zum Bewegen wenigstens eines Paneels (2) durch die Schneidstation (12) in einer ersten Richtung (4); eine Klinge (16), bewegbar entlang einer Schneidebene im Wesentlichen senkrecht zur ersten Richtung (4), um wenigstens einen Teil eines jeden Paneels (2) zu schneiden; die Zuführeinheit (11) umfasst eine erste Zuführeinrichtung (17); (30), die ihrerseits wenigstens eine Greif- und Trageinheit (21; 31) für wenigstens ein erstes Paneel (2) umfasst; eine zweite Zuführeinrichtung (22), die ihrerseits wenigstens eine zweite Greif- und Trageinheit (23) für wenigstens ein zweites Paneel (2) aufweist; wenigstens eine dritte Zuführeinrichtung (25; 30, 33), die ihrerseits wenigstens eine dritte Greif- und Trageinheit (26; 31, 34) umfasst, selektiv anschließbar an die erste Zuführeinrichtung (17; 30) oder die zweite Zuführeinrichtung (22), zum Bewegen in der ersten Richtung nach demselben Bewegungsgesetz wie die erste Zuführeinrichtung (17; 30) oder die zweite Zuführeinrichtung (22); und einen ersten Antrieb (20; 32) sowie einen zweiten Antrieb (24) zum Bewegen der ersten Zuführeinrichtung (17; 30) beziehungsweise der zweiten Zuführeinrichtung (22) in der ersten Richtung (4) in Bezug auf unabhängige Bewegungsgesetze; **dadurch gekennzeichnet, dass** die Maschine für jede dritte Greif- und Trageinheit (26) eine entsprechende Kupplung (27) zum mechanischen Ankoppeln der dritten Greif- und Trageinheit (26) an die erste Zuführeinrichtung (17; 30) oder die zweite Zuführeinrichtung (22) aufweist.

2. Maschine nach Anspruch 1, **dadurch gekennzeichnet, dass** die Kupplung (27) ein erstes und ein zweites Verriegelungselement (28, 29) umfasst, die in Bezug zueinander zwischen einer Verriegelungsposition und einer Freigabeposition bewegbar sind.

3. Maschine nach Anspruch 2, wobei das erste Verriegelungselement (28) einen Stift umfasst, der sich quer zur ersten Richtung (4) erstreckt, und das zweite Verriegelungselement (29) eine Aussparung umfasst, die den Stift aufnimmt.

4. Maschine nach einem der vorausgegangenen Ansprüche, **dadurch gekennzeichnet, dass** jede Greif- und Trageinheit (21; 23; 26; 31, 34) einen Greifer mit einer Unterklaue und einer Oberklaue umfasst, die in Bezug zueinander zwischen einer Greif- und einer Freigabeposition beweglich sind.

5. Maschine nach einem der vorausgegangenen Ansprüche, wobei die dritte Zuführeinrichtung (25; 30, 33) zwischen der ersten Zuführeinrichtung (17; 30) und der zweiten Zuführeinrichtung (22) angeordnet ist.

6. Maschine gemäß einem der vorausgegangenen Ansprüche, weiterhin umfassend einen Tragrahmen (3), der seinerseits eine erste und eine zweite Längsführung (8a, 8b) aufweist, die parallel zueinander sowie zur ersten Richtung 4 angeordnet sind, sowie eine dritte Längsführung (19), die sich zwischen der ersten und der zweiten Längsführung (8a, 8b) in der ersten Richtung (4) erstreckt.

7. Maschine nach Anspruch 6, wobei die dritte Zuführeinrichtung (25; 30, 33) von der dritten Längsführung (19) getragen ist.

8. Maschine nach Anspruch 6 oder 7, wobei sich die erste Zuführeinrichtung (17) zwischen der ersten und der dritten Längsführung (8a, 19) erstreckt.

9. Maschine nach Anspruch 6 oder 7, wobei die erste Zuführeinrichtung (30) von der dritten Längsführung (19) getragen ist, wobei sich die vierte Zuführeinrichtung (17) zwischen der ersten und der dritten Längsführung (8a, 19) erstreckt, und einen vierten Antrieb (20) zum Bewegen der vierten Zuführeinrichtung (17) in der ersten Richtung (4) gemäß einem Bewegungsgesetz unabhängig von dem Bewegungsgesetz der ersten Zuführeinrichtung (30) und der zweiten Zuführeinrichtung (22).

10. Maschine nach einem der Ansprüche 6 bis 9, wobei die dritte Längsführung (19) von der zweiten Längsführung (8b) in einer zweiten Richtung (15) quer zur ersten Richtung (4) hervorragt.

## Revendications

1. Machine pour couper des panneaux (2) en bois ou similaire, la machine comprenant une station de coupe (12) ; une unité d'alimentation (11) pour déplacer au moins un panneau (2) au travers de la station de coupe (12) dans une première direction donnée (4) ; et une lame (16) qui peut être déplacée suivant un plan de coupe sensiblement perpendiculaire à la première direction (4) de manière à découper au moins une partie de chaque panneau (2) ; l'unité d'alimentation (11) comprenant un premier dispositif d'alimentation (17 ; 30) qui comprend à son tour au moins un premier élément de préhension et de transport (21 ; 31) pour au moins un premier panneau (2) ; un deuxième dispositif d'alimentation (22) qui comprend à son tour au moins un deuxième élément de préhension et de transport (23) pour au moins un second panneau (2) ; au moins un troisième dispositif d'alimentation (25 ; 30, 33) qui comprend à son tour au moins un troisième élément de préhension et de transport (26 ; 31, 34) qui peut être connecté de manière sélective au premier dispositif d'alimentation (17 ; 30) ou au deuxième dispositif d'alimentation (22), de manière à réaliser un déplacement dans la première direction (4) selon la même loi de déplacement que pour le premier dispositif d'alimentation (17 ; 30) ou pour le deuxième dispositif d'alimentation (22) ; et un premier dispositif d'entraînement (20 ; 32) et un second dispositif d'entraînement (24) pour déplacer respectivement le premier dispositif d'alimentation (17 ; 30) et le deuxième dispositif d'alimentation (22) dans la première direction (4) selon des lois de déplacement indépendantes respectives, la machine étant **caractérisée en ce qu'**elle comprend également, pour chaque dit troisième élément de préhension et de transport (26), un dispositif de couplage respectif (27) pour connecter mécaniquement le troisième élément de préhension et de transport (26) au premier dispositif d'alimentation (17 ; 30) ou au deuxième dispositif d'alimentation (22).

2. Machine selon la revendication 1, dans laquelle le dispositif de couplage (27) comprend des premier et second éléments de blocage (28, 29) qui sont mobiles l'un par rapport à l'autre entre une position de blocage et une position de libération.

3. Machine selon la revendication 2, dans laquelle le premier élément de blocage (28) comprend une broche qui s'étend transversalement à la première direction (4) ; et le second élément de blocage (29) comprend un évidement pour recevoir la broche.

4. Machine selon l'une quelconque des revendications précédentes, dans laquelle chaque dit élément de préhension et de transport (21 ; 23 ; 26 ; 31, 34) comprend un moyen de préhension qui comporte une mâchoire inférieure et une mâchoire supérieure mobiles l'une par rapport à l'autre entre une position de préhension et une position de libération.

5. Machine selon l'une quelconque des revendications précédentes, dans laquelle le troisième dispositif d'alimentation (25 ; 30, 33) est situé entre le premier dispositif d'alimentation (17 ; 30) et le deuxième dispositif d'alimentation (22).

6. Machine selon l'une quelconque des revendications précédentes, et comprenant également un cadre de support (3) qui comprend à son tour des premier et deuxième éléments de guidage longitudinal (8a, 8b) parallèles l'un à l'autre et à ladite première direction (4), et un troisième élément de guidage longitudinal (19) qui s'étend entre lesdits premier et deuxième éléments de guidage longitudinal (8a, 8b) dans la première direction (4).

7. Machine selon la revendication 6, dans laquelle le troisième dispositif d'alimentation (25 ; 30, 33) est supporté par ledit troisième élément de guidage longitudinal (19).

8. Machine selon la revendication 6 ou 7, dans laquelle le premier dispositif d'alimentation (17) s'étend entre lesdits premier et troisième éléments de guidage longitudinal (8a, 19).

9. Machine selon la revendication 6 ou 7, dans laquelle le premier dispositif d'alimentation (30) est supporté par le troisième élément de guidage longitudinal (19) ; l'unité d'alimentation (11) comprenant un quatrième dispositif d'alimentation (17) qui s'étend entre les premier et troisième éléments de guidage longitudinal (8a, 19), et un quatrième dispositif d'entraînement (20) pour déplacer le quatrième dispositif d'alimentation (17) dans la première direction (4) selon une loi de déplacement indépendante des lois de déplacement du premier dispositif d'alimentation (30) et du deuxième dispositif d'alimentation (22).

10. Machine selon l'une quelconque des revendications 6 à 9, dans laquelle le troisième élément de guidage longitudinal (19) fait saillie depuis le deuxième élément de guidage longitudinal (8b) dans une seconde direction (15) transversale à la première direction (4).
